# EUROPÄISCHE PATENTSCHRIFT

(11) **EP 3 204 207 B1**
(45) Veröffentlichungstag und Bekanntmachung des Hinweises auf die Patenterteilung: **27.03.2019**
(21) Anmeldenummer: 15775234.6
(22) Anmeldetag: 08.10.2015
(51) Int. Cl.: B29C 64/112, B29C 45/14, B29C 45/16, B29C 70/74, B29C 37/00, B33Y 80/00

(54) **VERFAHREN ZUR WEITERVERARBEITUNG EINES VORGEFERTIGTEN PRODUKTES SOWIE ZUGEHÖRIGES VORGEFERTIGTES PRODUKT**
METHOD FOR THE FURTHER PROCESSING OF A PREFABRICATED PRODUCT, AND ASSOCIATED PREFABRICATED PRODUCT
PROCÉDÉ DE TRAITEMENT DE PRODUITS PREFABRIQUES ET PRODUITS PRÉFABRIQUÉS ASSOCIÉS

(30) Priorität: 10.10.2014 DE 102014220617
(43) Veröffentlichungstag der Anmeldung: 16.08.2017
(73) Patentinhaber: Arburg GmbH + Co KG, 72290 Loßburg (DE)
(72) Erfinder: KESSLING, Oliver, 78050 Villingen-Schwenningen (DE); DUFFNER, Eberhard, 72181 Starzach (DE)
(74) Vertreter: Reinhardt, Harry
(86) Internationale Anmeldenummer: PCT/EP2015/073224
(87) Internationale Veröffentlichungsnummer: WO 2016/055555

(56) Entgegenhaltungen:
- EP-A2- 2 620 289
- DE-A1-102013 003 167
- US-A1- 2009 177 309
- US-A1- 2014 020 192

## Beschreibung

Die Erfindung betrifft ein Verfahren zur Weiterverarbeitung eines zumindest teilweise vorgefertigten Produkts mit einer Individualisierungsfläche nach dem Oberbegriff des Anspruches 1 sowie ein vorgefertigtes Produkt nach dem Oberbegriff des Anspruches 14.

Im Rahmen dieser Anmeldung werden unter dem Begriff Individualisierungsfläche beliebige auch dreidimensional geformte oder gekrümmte Flächen verstanden, die für das Aufbringen einer mehrdimensionalen Individualisierung bestimmt und geeignet sind.

Unter "Individualisierung" wird im Rahmen dieser Anmeldung verstanden, dass ein vorgefertigtes Produkt wie ein Gebrauchsspritzgussteil individuell, bis zu jedem vorgefertigten Produkt einzeln weiterverarbeitet, identifiziert und individualisiert wird. Eine Individualisierung wird aufgebracht, so dass aus einem in größeren Stückzahlen anonym vorgefertigten Produkt ein individuelles Produkt entsteht.

Grundsätzlich stellt sich immer wieder die Aufgabe, bereits in größeren Stückzahlen vorgefertigte Produkte, sei es ein Halbzeug oder ein auf beliebige Weise gefertigter Gegenstand auf unterschiedlichste Art und Weise zu individualisieren. Die Individualisierung kann eine Seriennummer, eine Unterschrift oder eine andere persönliche Information sein, ebenso ist es jedoch denkbar, dass die Individualisierung dazu dient, dass Produkt mit einem Kopierschutz zu versehen.

Aus der dem Oberbegriff des Anspruches 1 zugrundeliegenden WO 2013/154723 A1 sind ein Verfahren sowie ein Produkt bekannt, bei denen durch additives Fertigen Einlegeteile umkapselt werden. Zunächst wird vorzugsweise ebenfalls additiv eine Grundlage gefertigt, auf oder in das das Einlegeteil eingesetzt wird, das anschließend eingebettet wird. Das Verfahren ist für die gleichzeitige Bearbeitung von 10 bis 40 Teilen bestimmt, wobei schichtweise ein UV-aushärtbares Material ausgebracht und zur Einbettung des Einlegeteils aufgetragen wird. Eine Individualisierung bis hin zum einzelnen jeweiligen Produkt aus einer Mehrzahl identischer vorgefertigter Produkte ist nicht vorgesehen.

Aus der WO 2014/005591 A1 ist es bekannt, an einem durch Kunststoffspritzgießen hergestellten Produkt eine Montagefläche vorzusehen, auf der ein von diesem Produkt später wieder lösbares weiteres Teil durch additive Fertigung aufgebracht wird, so dass sich individuell geformte Bausteine ergeben. Ziel ist eine hochgradige Gestaltungsfreiheit mit gleichwohl zuverlässiger Verbindung der Bausteine des Ausgangsprodukts und des auf der Montagefläche gefertigten weiteren Bausteins zu erzeugen.

Aus der WO 2010/071445 A1 ist es bekannt, komplexe Teile durch 3D-Techniken zu fertigen und diese dann zu um spritzen. Mit anderen Worten wird ein 3D-Druckprozess als Basis genommen und eine entsprechend angespritzte Oberfläche daran aufgebracht. Ziel ist es, eine Oberfläche wie bei einem durch Spritzgießen hergestellten Endprodukt zu erreichen, jedoch keine Individualisierung.

Die US 2001/0035597 A1 offenbart eine Aufbringung von auch dreidimensionalen Markierungen auf Halbleiterprodukten durch Stereolithographie, um dadurch Lage und Ausrichtung der Halbleiter während des Verarbeitungsprozesses zu bestimmen. Das Dokument EP 2 620 289 A2 offenbart das Aufbringen von Fluidtropfen zur Bildung eines Motivs auf wenigstens einen Teil eines wenigstens teilweise mit einer dreidimensionalen Struktur versehenen Objektes.

Ein additives Fertigungsverfahren zum Auftragen von Tropfen, die aneinander gefügt werden, ist insbesondere aus der EP 1 886 793 A1 bekannt. Dort wird eine in der Spritzgießtechnik bekannte Plastifiziereinheit, die das Material aufbereitet, mischt und homogenisiert, an einen unter Druck setzbaren Materialspeicher angekoppelt. Zur Erzeugung eines Gegenstandes auf einem Objektträger wird dieses Material über eine Austragsöffnung in Form von Tropfen ausgetragen. Aufgrund der Adhäsionskräfte des Materials und der erforderlichen kleinen Tropfengröße im Bereich von 0,01 bis 0,05 mm³ ist dabei ein Druck in einer Höhe von mehr als 10 bis 100 MPa bei hohen Schmelztemperaturen erforderlich. Die Plastifiziereinheit hat jedoch den Vorteil, dass übliche Spritzgießmaterialien verwendet werden können, da durch die Aufbereitung derartige meist rieselfähige Rohmaterialien in einen flüssigen Aggregatszustand überführt werden können. Zudem kann die Temperatur des Materials als auch der aufgebrachten Tropfen so beeinflusst werden, dass sich eine optimale Verbindung zwischen Tropfen und Untergrund ergibt.

Ausgehend von diesem Stand der Technik liegt der vorliegenden Erfindung die Aufgabe zugrunde, ein Verfahren zur Verfügung zu stellen, durch das in größeren Stückzahlen vorgefertigte Produkte nach individuellen Wünschen weiterverarbeitet, individualisiert oder personalisiert werden können. Ferner soll ein vorgefertigtes Produkt zur Verfügung gestellt werden, das dieses Verfahren ermöglicht.

Diese Aufgabe wird durch ein Verfahren mit den Merkmalen des Anspruches 1 sowie durch ein vorgefertigtes Produkt mit den Merkmalen des Anspruches 14 gelöst.

Verfahrensgemäß wird von einem vorgefertigten Produkt ausgegangen, das als Fläche für einen additiven mehrdimensionalen Materialauftrag eine Individualisierungsfläche aufweist. Informationen für den additiven mehrdimensionalen Materialauftrag werden zur mehrdimensionalen, d.h. dreidimensionalen Individualisierung des Produktes zur Verfügung gestellt, so dass diese mehrdimensionale Individualisierung so aufbereitet werden kann, dass eine additive Auftragung auf der Individualisierungsfläche möglich ist. Das vorgefertigte Produkt wird dann in eine entsprechende Vorrichtung zur additiven Aufbringung der Individualisierung verbracht und dort wird auf der Individualisierungsfläche die mehrdimensionale Individualisierung, die digital in die verschiedenen Elemente, z.B. Schichten, zerlegt wurde, wieder so zusammengesetzt, dass das vorgefertigte Produkt nach diesem Weiterverarbeitungsvorgang entsprechend individualisiert ist. Dies kann für jedes Produkt je Maschinenzyklus einzeln erfolgen. Es kann also ein vorgefertigtes Produkt wie ein Gebrauchsspritzgussteil aus einer Mehrzahl gleicher Produkte individuell weiterverarbeitet, identifiziert und individualisiert werden.

Beispielsweise kann ein Kunde vorgeben, dass das vorgefertigte Produkt z.B. mit seinem Logo, seiner Unterschrift oder einem Bild individualisiert wird, das er auf ein Feld in einem Auftrag schreibt, kopiert oder auf geeignete andere Art und Weise hinterlässt. Dieser Auftrag wird eingelesen und es wird ein in größeren Stückzahlen vorgefertigtes Produkt, z.B. durch Spritzgießen bereit gestellt, das die entsprechende Individualisierungsfläche hat. Dieses Produkt wird dann in einer Vorrichtung zur additiven Fertigung mit der mehrdimensionalen Individualisierung versehen, d.h. die Individualisierung wird aufgebracht, so dass aus einem in größeren Stückzahlen anonym vorgefertigten Produkt ein individuelles Produkt entsteht.

Vorzugsweise erfolgt der additive Auftrag durch das Ausbringen von Tropfen, die aneinander gefügt werden. Bedarfsweise kann auch das vorgefertigte Produkt selbst durch ein additives Fertigungsverfahren hergestellt werden, es kann jedoch ebenso ein Produkt sein, das z.B. durch einen Spritzgießprozess hergestellt wird, in dem gleichzeitig Einlegeteile eingelegt werden. Ebenso kann ein Halter, der in der Vorrichtung zur additiven Fertigung verwendet wird, um das vorgefertigte Produkt dort zu halten, auch durch diese Vorrichtung selbst hergestellt werden, d.h. die Informationen, die eine Fertigung des Produkts ermöglichen, werden ebenso genutzt, um den Halter zu erstellen. Diese Information kann vorzugsweise das Produkt selbst in Form von Auftrags- und Prozessdaten mit sich tragen, indem z.B. ein QR-Code auf dem vorgefertigten Produkt oder auch auf der Individualisierungsfläche vorhanden ist oder ein RFID-Chip das Produkt während des Weiterverarbeitungsprozesses begleitet.

Für eine derartige Weiterverarbeitung zur Individualisierung ist das Produkt mit einem Informationsträger ausgestattet oder wird von einem Informationsträger an einem vom Produkt abtrennbaren Bereich oder Halteelement begleitet. Anhand der auf dem Informationsträger enthaltenen Informationen wird dann die Individualisierung in Form von miteinander verbundenen Tropfen gefertigt.

Bedarfsweise kann das vorgefertigte Produkt in weiteren Verfahrensschritten mit einem Materialauftrag versehen werden, der die mehrdimensionale Individualisierung einbettet oder auch überdeckt. Ferner können weitere Materialien durch geeignete Verfahrensschritte wie z.B. wiederum durch additive Fertigung aufgebracht werden, die das vorgefertigte Produkt weiter individualisieren, indem sie z.B. eine bestimmte an den Benutzer angepasste Haptik erzeugen.

Weitere Vorteile ergeben sich aus den Unteransprüchen und der nachfolgenden Beschreibung bevorzugter Ausführungsbeispiele.

Im Folgenden wird die Erfindung anhand von in den Figuren dargestellten Ausführungsbeispielen näher erläutert. Es zeigen:
- Fig. 1: eine teilweise geschnittene Ansicht einer Vorrichtung zur additiven Fertigung,
- Fig. 2: eine dreidimensionale Darstellung eines Objektträgers mit einem darauf angebrachten Halter, in den das vorgefertigten Produkts eingelegt ist,
- Fig. 3a: eine Ansicht eines vorgefertigten Produktes mit Individualisierungsfläche,
- Fig. 3b: eine Ansicht des Produktes gemäß Fig. 3a mit aufgebrachter mehrdimensionaler Individualisierung,
- Fig. 3c: einen Schnitt nach Linie IIIc-IIIc von Fig. 3b,
- Fig. 4a: eine Darstellung gemäß Fig. 3b,
- Fig. 4b: einen Schnitt nach Linie IVb-IVb von Fig. 4a,
- Fig. 5a, 5b: ein vorgefertigtes Produkt mit überdeckter Individualisierung in Draufsicht sowie im Schnitt nach Linie Vb-Vb von Fig. 5a.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

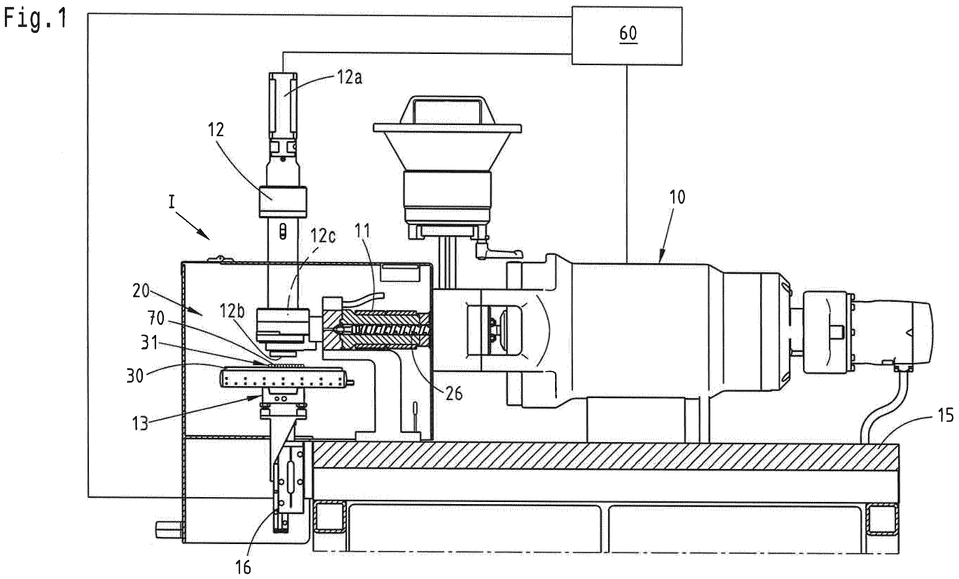

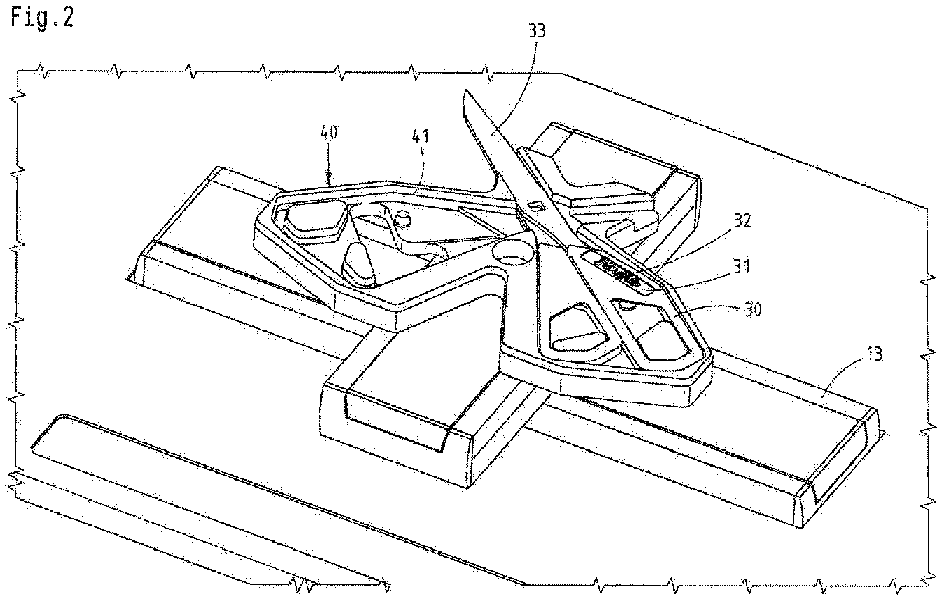

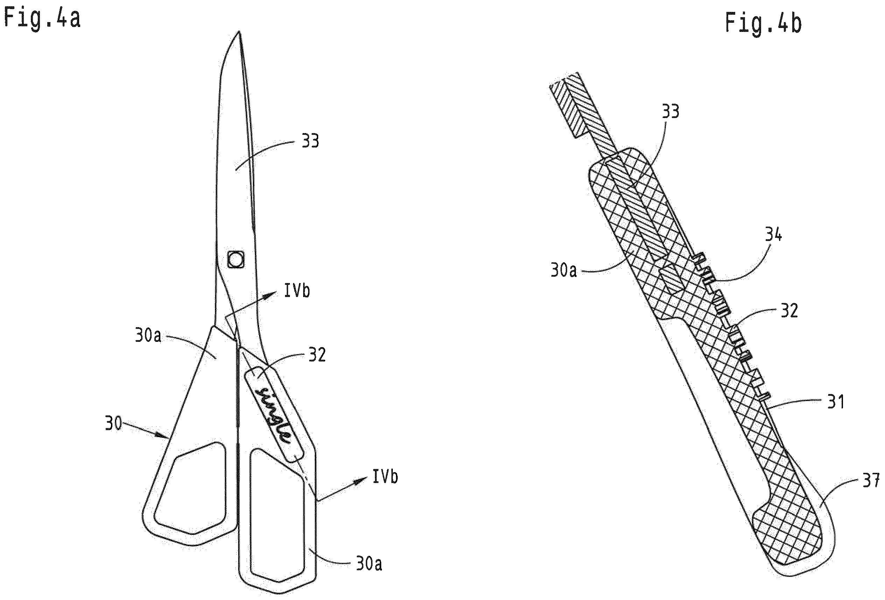

Bevor auf den Verfahrensablauf für die Weiterverarbeitung vorgefertigter Produkte 30 gemäß den Figuren 2 bis 5b eingegangen wird, wird zunächst unter Bezug auf Fig. 1 der Aufbau und die Arbeitsweise einer Vorrichtung I zur Herstellung eines dreidimensionalen Gegenstandes durch additive Fertigung aus wenigstens einem verfestigbaren Material erläutert. Das Material 34, das im Ausführungsbeispiel zur Herstellung eines additiven, mehrdimensionalen Materialauftrags als mehrdimensionale Individualisierung 32 verwendet wird, wird mittels einer Plastifiziereinheit zur Verarbeitung plastifiziert bzw. verflüssigt. Dabei wird eine in der Spritzgießtechnik an sich bekannte Plastifiziereinheit verwendet, die das Material aufbereitet, mischt und homogenisiert. Die Plastifiziereinheit erzeugt zugleich einen aufgrund der vorzugsweise tropfenweisen Ausbringung erforderlichen hohen Druck in einem Bereich von mehr als 10 bis 100 MPa. Durch die Verwendung der Plastifiziereinheit, die in Fig. 1 durch die Druckerzeugungseinheit 10 und die Aufbereitungseinheit 11 dargestellt ist, können in der Spritzgießtechnik übliche Materialien und Zusätze verwendet werden, die meist in einem rieselfähigen Ausgangszustand vorliegen und durch die Plastifiziereinheit in den flüssigen Aggregatszustand überführt werden. Dieses Material härtet vorzugsweise nach dem Ausbringen aus einer Austragseinheit 12 aus und bildet dadurch den zu fertigenden Gegenstand bzw. die mehrdimensionale Individualisierung 32. Ein Aushärten mittels weiterer Hilfsmittel ist grundsätzlich nicht erforderlich. Insbesondere muss nicht erst eine Schicht ausgehärtet werden, bevor die nächste Schicht aufgetragen werden kann. Dadurch können die Materialien auch schichtübergreifend "nass in nass" gefertigt werden, d.h. Tropfen 70 der vorausgehenden Schicht können, müssen aber nicht noch so plastifiziert oder temperiert sein, dass sich eine besserer Verbindung der Schichten ergibt, als wenn eine Schicht schon vollständig ausgehärtet ist, bevor Tropfen 70 der nächsten Schicht darauf aufgebracht werden.

Vorzugsweise werden dazu Tropfen 70 aus einem unter Druck stehenden Materialspeicher 12c über die Austrittsöffnung 12b in Richtung auf den Objektträger 13 und das dort befindliche vorgefertigte Produkt 30 innerhalb eines Bauraums 20 ausgetragen. Durch den sequenziellen Austrag von Tropfen 70 oder auch Strängen oder Fäden wird so Schicht für Schicht die mehrdimensionale Individualisierung 32 auf einem durch eine Antriebseinheit 16 relativ zur Austrittsöffnung 12b beweglichen Objektträger 13 im Bauraum 20 erzeugt. Der Materialspeicher 12c wird durch das Fördermittel 26 gefüllt und unter Druck gesetzt. Die gesamte Vorrichtung befindet sich auf einem Maschinenfuß 15. Gesteuert wird sie über eine Steuereinrichtung 60, die das Antriebsteil 12a der Austragseinheit 12, die Antriebseinheit 16 für den Objektträger 13 und die Druckerzeugungseinheit 10 auf der Basis von vorgegebenen oder eingegebenen Informationen steuert.

Da die Art des Materials und dessen Verarbeitung für das Ergebnis des Verfahrens, also für die Qualität des hergestellten Gegenstandes wesentlich sind, wird hierauf detailliert eingegangen. Das verfestigbare Material ist ein plastifiziertes Material, wie z.B. Silikon oder ein plastifizierbares Material wie Thermoplaste oder auch pulverförmige Materialien. Das Material kann auch ein unter Wärme reversibel aufschmelzbares und damit recycelbares Material sein. Als Material kommen damit auch übliche beim Kunstspritzgießen verwendete Materialien in Betracht, d.h. es muss nicht auf teure Sondermaterialien zurückgegriffen werden. Derartige aus der Spritzgießtechnik bekannte Standardmaterialien sind günstig und gleichzeitig an jedem Ort der Welt erhältlich. Diese Materialien besitzen allerdings eine hohe Viskosität, was sie von anderen Materialien unterscheidet, wie sie im normalen Thermodruck- oder Inkjet-Verfahren verwendet werden. Die dynamische Viskosität des verfestigbaren Materials liegt zwischen 100 und 10000 Pa s, so dass entsprechende Drücke von mehr als 10 bis 100 MPa, insbesondere zur Erzielung kleiner Tropfenvolumen erforderlich sind.

In der Praxis zeigt sich aber, dass genau diese Vorgehensweise und der Druck dazu beitragen, dass sich bei der Herstellung gute Ergebnisse einstellen. Das Material wird aufbereitet, gemischt und homogenisiert und unmittelbar aus dem unter dem genannten Druck stehenden Materialspeicher vorzugsweise tropfenweise ausgetragen. Diese ausgetragenen Tropfen bilden zugleich die endgültige Geometrie, d.h. sie härten ohne weitere Hilfsmittel und Abkühlung aus. Durch Druck, Verarbeitung wie beim Spritzgießen und tropfenweises Ausbringen findet ein Aneinanderfügen bzw. - schmelzen der Tropfen statt, was zu einer äußerst festen Verbindung der Materialien führt.

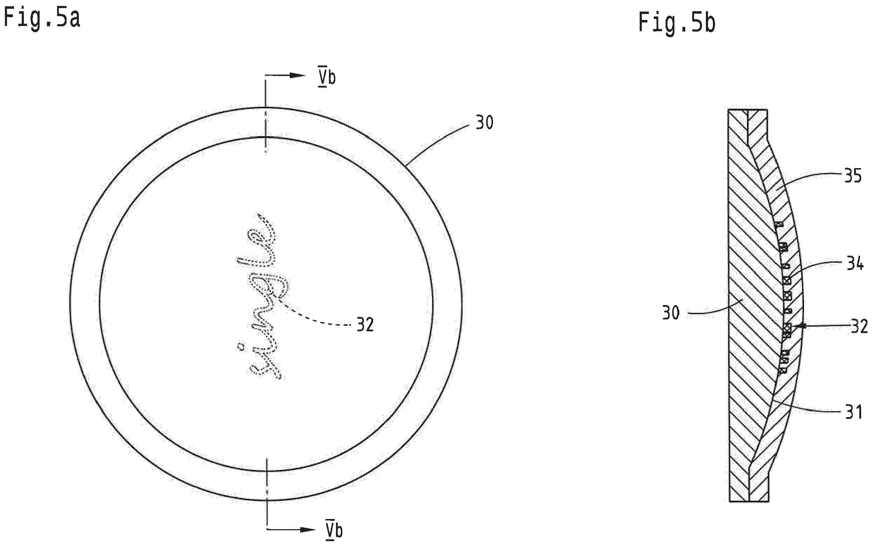

Die Figuren 2 bis 5b zeigen die Vorgehensweise bei einem Verfahren zur Weiterverarbeitung eines zumindest teilweise vorgefertigten Produkts 30, bei dem es sich in den Figuren 2 bis 4b um eine Schere und in den Figuren 5a, 5b um eine Linse handelt. Derartige Produkte können als Massenprodukt hergestellte Teile sein, die z.B. aus einen Spritzgießprozess oder einem anderen Fertigungsprozess stammen. Figur 2 zeigt einen Halter 40, der auf einem Objektträger 13 angeordnet ist, der durch einen X-Y-Schlitten gebildet ist. Erkennbar ist ein Aufnahmebereich 41 im Halter 40, wobei der linke, nicht mit einem vorgefertigten Produkt 30 versehene Bereich spiegelbildlich zum rechten Bereich ist, in den eine Schere eingelegt ist. Hintergrund für diese Vorgehensweise ist, dass ein vorgefertigtes Produkt wie ein Gebrauchsspritzgussteil individuell weiterverarbeitet, identifiziert und individualisiert werden soll. Bleiben wir beim Beispiel der Schere, so ist die Vorgehensweise wie folgt:

Ein Kunde oder Endbenutzer gibt per Auftrag vor, ob er eine Links- bzw. Rechtshänder-Schere haben möchte. Je nach seiner Auswahl muss später nämlich das vorgefertigte Produkt mit den Griffen 30a in den linken oder rechten Bereich des Halters 40 in Fig. 2 platziert werden. Der Kunde gibt ferner seine Einwilligung, dass die Schere z.B. mit seinem Logo, seiner Unterschrift oder einem Bild individualisiert wird, wobei er diese Informationen zur dreidimensionalen Individualisierung in einen Auftrag schreibt, kopiert oder eine Datei oder dergleichen hinterlässt. Dieser Auftrag wird eingelesen, d.h. kopiert und digitalisiert, so dass in einem vorgeschalteten Herstellungsprozess, wie z.B. einem Spritzgießprozess mit automatischer individueller Einlage der Metallschneideteile als Einlegeteile 33 eine Schere für Links- bzw. Rechtshänder in einem Spritzgießwerkzeug unter entsprechender Formung der Griffe 30a produziert wird. Durch diesen Schritt entsteht die Verbindung der Griffe 30a mit den Einlegeteilen. Die Verbindung von Griff 30a und Einlegeteil 33 kann in einem gesonderten Fertigungsschritt oder auch im gleichen Fertigungsschritt erfolgen, in dem auch die mehrdimensionale Individualisierung 32 erzeugt wird. In diesem Fall würden die Griffe 30a durch additive Fertigung geformt.

Nach dem Spritzgießprozess wird z.B. mittels eines Lasers ein QR-Code entsprechend den Auftragsdaten und den für das Teil erfolgten Ist-Spritzgießdaten an der Spritzgießautomation direkt auf den aktivierbaren Kunststoff am Teil gedruckt. Die so gefertigte Schere kann als vorgefertigtes Produkt 30 in eine Vorrichtung I zur additiven Fertigung der mehrdimensionalen Individualisierung eingebracht werden, wobei unter einer mehrdimensionalen Fertigung eine dreidimensionale Fertigung oder eine Fertigung zu verstehen ist, in der ein flächiges Element dreidimensional aufbereitet wird. Vorzugsweise wird dort aus einem QR-Code der Kundenauftrag aufgerufen und das zugehörige gewünschte individuelle Logo aus dem Auftrag mittels eines Algorithmus in Elemente zerlegt, d.h. in Schichten zerlegt. Die Schere wird dann je nachdem, ob sie als Rechts- bzw. Linkshänder-Schere ausgebildet ist, in den Halter 40 gelegt und in der Vorrichtung I mit der mehrdimensionalen Individualisierung 32 versehen. Diese mehrdimensionale Individualisierung 32, die zuvor digitalisiert und in Elemente zerlegt wurde, die zur additiven Auftragung der Individualisierung auf einer Fläche 31 als mehrdimensionaler Materialauftrag geeignet sind, wird gemäß den vorliegenden Informationen wieder zur mehrdimensionalen Individualisierung zusammengesetzt, d.h. die Individualisierung 32 wird erstellt. Die Fläche 31 ist insofern eine Individualisierungsfläche und wird im Folgenden als Individualisierungsfläche 31 bezeichnet. Bedarfsweise kann die so erzeugte Individualisierung noch mit einer z.B. durchsichtigen weiteren Material 35 überzogen werden, indem das Produkt z.B. in einem weiteren Spritzgießvorgang umspritzt wird. Ebenso ist es möglich weiteres Material 37 aufzubringen, um die Schere mit einer durchsichtigen Weichkomponente zur Erhöhung von Ergonomie und Haptik zu verbessern Durch die Informationen wird wenigstens eines der vorgefertigten Produkte 30 identifiziert und individuell mit der mehrdimensionalen Individualisierung 32 versehen.

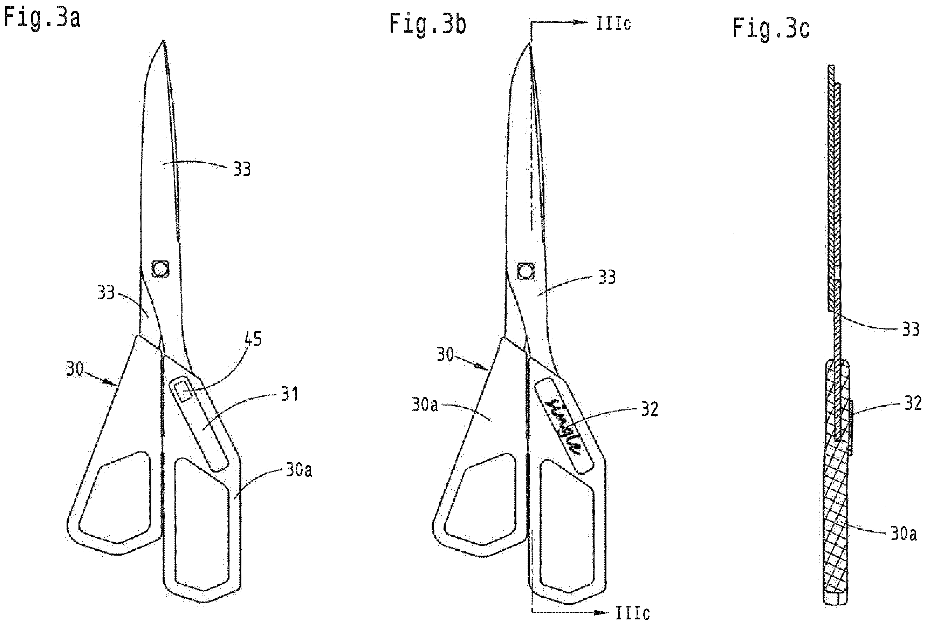

Gemäß Fig. 1 kann das additive Auftragen der Individualisierung durch Tropfen 70 erfolgen, die aneinander gefügt werden. Auch das vorgefertigte Produkt 30 selbst kann durch ein additives Fertigungsverfahren oder ein anderes Verfahren, wie durch Spritzgießen hergestellt werden. Die Figuren 3a bis 3c machen deutlich, dass im Ausführungsbeispiel die Schere als vorgefertigtes Produkt 30 die Individualisierungsfläche 31 hat, in der auch ein Informationsträger 45 angeordnet sein kann. Der Informationsträger 45 kann auch an anderer Stelle des Produkts angeordnet sein oder in nicht dargestellter Weise auch das Produkt während des Herstellungsprozesses begleiten, also vom Produkt gesondert vorhanden sein und/oder vom Produkt abtrennbar.

Fig. 3a und 3b unterscheiden sich dadurch, dass in Fig. 3b die mehrdimensionale Individualisierung 32 bereits aufgebracht ist. In Fig. 3c, der Schnittdarstellung von 3b nach Linie IIIc-IIIc ist zu erkennen, dass die mehrdimensionale Individualisierung 32 tatsächlich aufträgt. Die Griffe 30a stehen mit den Einlegeteilen der Scherenklingen in Verbindung und sind an diese angespritzt.

Die mehrdimensionale Individualisierung 32 kann z.B. ein vorzugsweise einmaliges Muster sein, das der Benutzer und Auftraggeber sich wünscht. Dieses Muster ist ein dreidimensionales Objekt. Die Individualisierung 32 wird digitalisiert und in Elemente zur additiven Aufbringung zerlegt, also z.B. in Schichten zerlegt, die dann Tropfen für Tropfen oder Strang für Strang durch die Vorrichtung I zur additiven Aufbringung der Individualisierung aufgebaut werden.

Als mehrdimensionale Individualisierung 32 kommen insbesondere Elemente in Betracht, die eine vorbestimmte Geometrie haben, es kann sich um eine Seriennummer oder eine Unterschrift oder ein Bild handeln. Die mehrdimensionale Individualisierung 32 kann aber auch ein Kopierschutz sein, der am fertigen Produkt nicht mehr erkennbar ist, jedoch eine Wiedererkennung durch den Hersteller ermöglicht. Nicht nur, aber auch zu diesem Zweck kann das für das additive Aufbringen verwendete Material 34 codiert und/oder elektrisch detektierbar sein. Wird ein derartiger Kopierschutz im fertigen Produkt unmanipulierbar eingeschlossen, ergibt sich ein zuverlässiger Plagiatsschutz.

Ein weiterer Materialauftrag 35 kann gemäß Fig. 5b bei einem vorgefertigten Produkt 30 wie der in der in Fig. 5a dargestellten Linse so erfolgen, dass in einem weiteren Fertigungsschritt die Individualisierung 32 mit dem Materialauftrag 35 überdeckt wird. Der Materialsauftrag ist in Fig. 5a opak, er kann jedoch genauso gut transparent oder halbtransparent sein. Der weitere Materialauftrag 35 kann durch Umspritzen des vorgefertigten und mit der mehrdimensionalen Individualisierung 32 versehenen vorgefertigten Produkts 30 z.B. im Formhohlraum eines Spritzgießwerkzeuges auf einer Spritzgießmaschine erfolgen.

Um die Hafteigenschaften der Individualisierungsfläche 31 zu verbessern, kann vor dem additiven Aufbringen der Individualisierung die Individualisierungsfläche vorbehandelt werden. Dies kann mittels eines Lasers erfolgen, ein Laser kann aber auch zum Beschriften verwendet werden, indem z.B. ein QR-Code aufgebracht wird, der weitere Informationen für die Verarbeitung beinhaltet. Diese Beschriftung kann durch die spätere mehrdimensionale Individualisierung 32 abgedeckt werden. Eine Plasma-Vorbehandlung der Individualisierungsfläche ist zur Verbesserung der Hafteigenschaften ebenso möglich.

Auch der Halter 40 für das vorgefertigte Produkt 30 zur Aufbringung der mehrdimensionalen Individualisierung 32 kann auf der Vorrichtung I zum additiven Aufbringen in einem Schritt vor der Individualisierung gefertigt werden, wobei der Halter 40 dann an die gegebene Kinematik der Vorrichtung I angepasst wird.

Vorzugsweise bringt das vorgefertigte Produkt 30 die Informationen für die Individualisierung in Form von Auftrags- und Prozessdaten mit sich, indem entweder ein entsprechender QR-Code angebracht wird oder ein RFID-Chip am Produkt oder begleitend zum Produkt vorgesehen ist. Die Vorrichtung I zur additiven Aufbringung der mehrdimensionalen Individualisierung 32 identifiziert das vorgefertigte Produkt 30 anhand dieser mitgebrachten Informationen und verarbeitet es entsprechend weiter.

Gemäß Fig. 3a weist das vorgefertigte Produkt 30 die Individualisierungsfläche 31 auf und ist im Ausführungsbeispiel mit einem dem vorgefertigten Produkt 30 zugeordneten Informationsträger 45 zur Aufnahme von Informationen zur Individualisierung des vorgefertigten Produkts versehen. Der Informationsträger 45 und das vorgefertigte Produkt sind gemeinsam zumindest während des Herstellungsprozesses beförderbar. In Fig. 3a befindet sich dieser Informationsträger 45 an der Individualisierungsfläche 31 und wird später durch die mehrdimensionale Individualisierung 32 überdeckt. Er kann sich jedoch auch an anderer Stelle am oder in der Nähe des vorgefertigten Produkts 30 befinden und den Fertigungsablauf zusammen mit dem vorgefertigten Produkt durchlaufen. Auf der Basis der mitgebrachten Informationen wird auf der Individualisierungsfläche 31 die mehrdimensionale Individualisierung 32 in Form von miteinander verbundenen Tropfen 70 erzeugt, was auch am fertigen Produkt zu erkennen ist.

Das vorgefertigte Produkt ist vorzugsweise ein Spritzgießteil, insbesondere mit Einlegeteilen 33 wie in den Figuren 2a bis 4b zu sehen. Die mehrdimensionale Individualisierung ist ein z.B. einmaliges Muster oder ein dreidimensionales Objekt und umfasst wenigstens eines der Elemente bestehend aus einer vorbestimmten Geometrie, einer Seriennummer, einer Unterschrift, einem Bild oder einem Kopierschutz. Vorzugsweise ist das für die mehrdimensionale Individualisierung 32 verwendete Material 34 codiert und/oder elektrisch detektierbar. Die mehrdimensionale Individualisierung 32 kann mit einem weiteren Materialauftrag 35 überzogen sein, der vorzugsweise transparent, halbtransparent oder opak ist. Das vorgefertigte Produkt kann weitere Materialien 37 zur individuellen Anpassung an den Benutzer aufweisen. Dieses Material 37 ist geeignet, um z.B. elastische Oberflächen oder haptisch angenehme Oberflächen zu erzeugen.

Grundsätzlich können auch verschiedene Materialien aufgebracht werden, um z.B. durch zwei Komponenten oder mehrere Komponenten Aufdrucke mit unterschiedlichen Farben oder unterschiedlichen Härtegraden eine mehrdimensionale Individualisierung 32 zu erzeugen. Eine Individualisierung kann auf ein Schriftfeld erfolgen, welches bereits mit dem Laser beschriftet wurde.

Es versteht sich von selbst, dass diese Beschreibung verschiedensten Modifikationen, Änderungen und Anpassungen unterworfen werden kann, die sich im Bereich von Äquivalenten zu den anhängenden Ansprüchen bewegen.

### Bezugszeichenliste

- 10: Druckerzeugungseinheit
- 11: Aufbereitungseinheit
- 12: Austragseinheit
- 12a: Antriebsteil
- 12b: Austrittsöffnung
- 12c: Materialspeicher
- 13: Objektträger
- 15: Maschinentisch
- 16: Antriebseinheit für 13
- 20: Bauraum
- 26: Fördermittel
- 30: vorgefertigtes Produkt
- 30a: Griffe
- 31: Individualisierungsfläche
- 32: mehrdimensionale Individualisierung
- 33: Einlegeteil
- 34: Material für 32
- 35: weiterer Materialauftrag
- 37: weiteres Material
- 40: Halter
- 41: Aufnahme für 30
- 45: Informationsträger
- 60: Steuereinrichtung
- 70: Tropfen
- I: Vorrichtung zur Individualisierung

## Patentansprüche

1. Verfahren zur Weiterverarbeitung wenigstens eines zumindest teilweise vorgefertigten Produkts (30), das eine Fläche (31) für einen additiven mehrdimensionalen Materialauftrag aufweist,
wobei Informationen für den mehrdimensionalen Materialauftrag in eine Vorrichtung (I) eingegeben werden, in der aus diesen Informationen der mehrdimensionale Materialauftrag digitalisiert und in Elemente zerlegt wird, die zur additiven Auftragung des mehrdimensionalen Materialauftrags auf der Fläche (31) geeignet sind,
wobei das vorgefertigte Produkt (30) in die Vorrichtung (I) zur additiven Aufbringung des mehrdimensionalen Materialauftrags so eingebracht wird, dass die Elemente für den mehrdimensionalen Materialauftrag auf der Fläche (31) gemäß den Informationen mittels eines additiven Fertigungsverfahrens zusammengefügt werden,
wobei die Fläche eine Individualisierungsfläche (31) des vorgefertigten Produkts ist und der mehrdimensionale Materialauftrag eine das Material aufweisende mehrdimensionale Individualisierung (32) ist, die ein individuell geformtes dreidimensionales Objekt ist und zur Individualisierung des Produkts bestimmt und geeignet ist, und
durch die Informationen wenigstens eines der vorgefertigten Produkte identifiziert und individuell mit der mehrdimensionalen Individualisierung (32) versehen wird.

2. Verfahren nach Anspruch 1, wobei das additive Auftragen durch Tropfen (70) erfolgt, die vorzugsweise in noch plastischem Zustand aneinander gefügt werden.

3. Verfahren nach Anspruch 1 oder 2, wobei das vorgefertigte Produkt (30) selbst durch ein additives Fertigungsverfahren hergestellt ist.

4. Verfahren nach einem der vorhergehenden Ansprüche, wobei die mehrdimensionale Individualisierung (32) ein vorzugsweise einmaliges Muster ist, das digitalisiert und in die Elemente zur additiven Aufbringung zerlegt wird.

5. Verfahren nach einem der vorhergehenden Ansprüche, wobei die mehrdimensionale Individualisierung (32) wenigstens eines der Elemente umfassend eine vorbestimmte Geometrie, eine Seriennummer, eine Unterschrift oder ein Bild umfasst und/oder als Kopierschutz ausgebildet und verwendet wird.

6. Verfahren nach einem der vorhergehenden Ansprüche, wobei das für das additive Aufbringen der mehrdimensionalen Individualisierung (32) verwendete Material (34) kodiert und/oder elektrisch detektierbar ist.

7. Verfahren nach einem der vorhergehenden Ansprüche, wobei die mit der mehrdimensionalen Individualisierung (32) versehene Individualisierungsfläche (31) in einem weiteren Fertigungsschritt mit einem weiteren Materialauftrag (35) versehen wird, der vorzugsweise transparent, halbtransparent oder opak ist.

8. Verfahren nach Anspruch 7, wobei der weitere Materialauftrag (35) durch Umspritzen des vorgefertigten und mit der mehrdimensionalen Individualisierung (32) versehenen Produkts (30) im Formhohlraum eines Spritzgießwerkzeugs auf einer Spritzgießmaschine erfolgt.

9. Verfahren nach einem der vorhergehenden Ansprüche, wobei die Individualisierungsfläche (31) zur Verbesserung der Hafteigenschaften vor dem additiven Aufbringen der Individualisierung vorbehandelt wird und/oder mittels eines Lasers vorbehandelt oder beschriftet wird.

10. Verfahren nach einem der vorhergehenden Ansprüche, wobei ein Halter (40) für das vorgefertigte Produkt (30) zur Aufbringung der mehrdimensionalen Individualisierung (32) ebenfalls auf der Vorrichtung (I) zum additiven Aufbringen in einem Schritt vor der Individualisierung additiv gefertigt wird, wobei der Halter (40) an die gegebene Kinematik der Vorrichtung (I) zum additiven Aufbringen angepasst wird.

11. Verfahren nach einem der vorhergehenden Ansprüche, wobei am vorgefertigten Produkt (30) wenigstens ein weiteres Material (37) zur individuellen Anpassung an den Benutzer und/oder mehrdimensionalen weiteren Individualisierung des Produkts additiv aufgebracht wird.

12. Verfahren nach Anspruch 11 wobei aus den weiteren Materialien (37) elastische Oberflächen, insbesondere mit einer Haptik, geformt werden.

13. Verfahren nach einem der vorhergehenden Ansprüche, wobei das vorgefertigte Produkt (30) die Informationen für die Individualisierung in Form von Auftrags- und Prozessdaten mit sich trägt und wobei die Vorrichtung (I) zur additiven Aufbringung der mehrdimensionalen Individualisierung (32) das vorgefertigte Produkt (30) anhand dieser mitgebrachten Informationen identifiziert und weiterverarbeitet.

14. Vorgefertigtes Produkt (30) mit einer Fläche (31) für einen additiven mehrdimensionalen Materialauftrag, sowie mit einem dem vorgefertigten Produkt (30) zugeordneten Informationsträger (45), der Informationen für den additiven mehrdimensionalen Materialauftrag aufnimmt,
wobei der Informationsträger gemeinsam mit dem vorgefertigten Produkt beförderbar ist,
wobei die Fläche eine Individualisierungsfläche (31) des vorgefertigten Produkts ist, die zur Individualisierung des vorgefertigten Produkts bestimmt und geeignet ist,
wobei der additive Materialauftrag basierend auf den Informationen eine mehrdimensionale Individualisierung (32) ist, die zur Bildung eines individuell geformten dreidimensionalen Objekts durch aneinander geschmolzene und dadurch fest miteinander verbundene Tropfen (70) gebildet ist.

15. Vorgefertigtes Produkt nach Anspruch 14, wobei die mehrdimensionale Individualisierung (32) ein vorzugsweise einmaliges Muster ist.

16. Vorgefertigtes Produkt nach Anspruch 14 oder 15, wobei die mehrdimensionale Individualisierung (32) wenigstens eines der Elemente umfassend eine vorbestimmte Geometrie, eine Seriennummer, eine Unterschrift, ein Bild oder einen Kopierschutz umfasst und/oder das für die mehrdimensionalen Individualisierung (32) verwendete Material (34) kodiert und/oder elektrisch detektierbar ist.

17. Vorgefertigtes Produkt nach einem der Ansprüche 14 bis 16, wobei die mehrdimensionale Individualisierung (32) mit einem weiteren Materialauftrag (35) überzogen ist, der vorzugsweise transparent, halbtransparent oder opak ist.

## Claims

1. A method for the further processing of at least one at least partly prefabricated product (30) that has a surface (31) for an additive multi-dimensional application of material, wherein information for the additive multi-dimensional application of material is input into a device (I) for additive application in which the multi-dimensional application of the material is digitised from the information and is deconstructed into elements that are suitable for the additive application of the multidimensional application of the material to the surface (31),
wherein the prefabricated product (30) is introduced into the device (I) for additive application of the multi-dimensional material application such that the elements for the multi-dimensional application of material on the surface (31) are assembled in accordance with the information using an additive manufacturing method,
wherein the surface is an individualising surface (31) of the prefabricated product, and the multi-dimensional application of the material is a multi-dimensional individualisation (32) comprising the material, which individualisation is an individually formed three dimensional object and is intended and suitable for individualising the product, and at least one prefabricated product is identified by the information and is provided individually with the multi-dimensional individualisation (32).

2. A method according to Claim 1, wherein the additive application is performed by drops (70) that are preferably joined together in the still plastic condition.

3. A method according to Claim 1 or 2, wherein the prefabricated product (30) itself is manufactured by an additive manufacturing method.

4. A method according to one of the preceding claims, wherein the multi-dimensional individualisation (32) is a preferably one-off pattern that is digitised and deconstructed into the elements for the additive application.

5. A method according to one of the preceding claims, wherein the multi-dimensional individualisation (32) includes at least one of the elements including a predetermined geometry, a serial number, a signature or an image, and/or takes the form of and is used as a protection against copying.

6. A method according to one of the preceding claims, wherein the material (34) that is used for the additive application of the multi-dimensional individualisation (32) is coded and/or electrically detectable.

7. A method according to one of the preceding claims, wherein the individualising surface (31) that is provided with the multi-dimensional individualisation (32) is provided in a further manufacturing step with a further application of material (35) which is preferably transparent, semi-transparent or opaque.

8. A method according to Claim 7, wherein the further application of material (35) is performed by injecting material around the prefabricated product (30) which is provided with the multi-dimensional individualisation (32), in the mould cavity of an injection mould on an injection moulding machine.

9. A method according to one of the preceding claims, wherein, in order to improve the adhesive properties, before the additive application of the individualisation the individualising surface (31) is pre-treated and/or is pre-treated or annotated by means of a laser.

10. A method according to one of the preceding claims, wherein, for application of the multi-dimensional individualisation (32), a holder (40) for the prefabricated product (30) is also manufactured additively on the device (I) for additive application in a step before the individualisation, wherein the holder (40) is adapted to the prevailing kinematics of the device (I) for additive application.

11. A method according to one of the preceding claims, wherein at least one further material (37) for individual adaptation to the user and/or for multi-dimensional further individualisation of the product is additively applied to the prefabricated product (30).

12. A method according to Claim 11, wherein elastic surfaces, in particular having a particular feel, are formed from the further materials (37).

13. A method according to one of the preceding claims, wherein the prefabricated product (30) itself carries the information for individualisation in the form of order and processing data, and wherein the device (I) for additive application of the multi-dimensional individualisation (32) identifies the prefabricated product (30) on the basis of this included information and processes it further.

14. A prefabricated product (30) comprising a surface (31) for an additive multi-dimensional application of material, and having an information carrier (45) that is associated with the prefabricated product (30), for receiving information for the additive multi-dimensional application of material,
wherein the information carrier and the prefabricated product are conveyable together, wherein the surface is an individualising surface (31) of the prefabricated product that is intended and suitable for individualising the prefabricated product,
wherein, based on the information, the additive material application is a multi-dimensional individualisation (32) that, for the formation of an individually formed three dimensional object, is formed by drops (70), which are molten to one another and thus are mutually firmly connected.

15. A prefabricated product according to Claim 14, wherein the multi-dimensional individualisation (32) is a one-off pattern.

16. A prefabricated product according to Claim 14 or 15, wherein the multi-dimensional individualisation (32) includes at least one of the elements including a predetermined geometry, a serial number, a signature, an image or a protection against copying and/or the material (34) that is used for the multi-dimensional individualisation (32) is coded and/or electrically detectable.

17. A prefabricated product according to one of Claims 14 to 16, wherein the multi-dimensional individualisation (32) is coated with a further application of material (35) which is preferably transparent, semi-transparent or opaque.

## Revendications

1. Procédé de traitement d'au moins un produit au moins partiellement préfabriqué (30), qui présente une face (31) pour un ajout d'un matériau pluridimensionnel, des informations pour l'ajout du matériau pluridimensionnel étant fournies à un dispositif dans lequel l'ajout du matériau pluridimensionnel est numérisé à partir de ces informations et est décomposé en des éléments qui sont appropriés pour l'ajout du matériau pluridimensionnel sur la face (31),
le produit préfabriqué (30) étant introduit dans le dispositif (I) pour l'ajout pluridimensionnel de telle manière que les éléments pour l'ajout du matériau pluridimensionnel sur la face (31) soient assemblés suivant les informations au moyen d'un autre procédé de fabrication,
la face étant une face d'individualisation (31) du produit préfabriqué et l'ajout du matériau pluridimensionnel étant une individualisation pluridimensionnelle (32) comportant le matériau, qui est un objet tridimensionnel formé individuellement et qui est prévue et appropriée pour l'individualisation du produit, et au moins l'un des produits préfabriqués étant identifié grâce aux informations et pourvu individuellement de l'individualisation pluridimensionnelle (32).

2. Procédé selon la revendication 1, dans lequel l'ajout est réalisé au moyen de gouttes (70) qui sont agrégées les unes aux autres de préférence encore à l'état plastique.

3. Procédé selon la revendication 1 ou 2, dans lequel le produit préfabriqué (30) est lui-même fabriqué suivant un autre procédé de fabrication.

4. Procédé selon l'une des revendications précédentes, dans lequel l'individualisation pluridimensionnelle (32) est un modèle de préférence à usage unique qui est numérisé et décomposé en les éléments pour l'ajout.

5. Procédé selon l'une des revendications précédentes, dans lequel l'individualisation pluridimensionnelle (32) comprend au moins des éléments comprenant une géométrie prédéterminée, un numéro de série, une signature ou une image et/ou est réalisée et utilisée en tant que protection contre la copie.

6. Procédé selon l'une des revendications précédentes, dans lequel le matériau (34) utilisé pour l'ajout de l'individualisation pluridimensionnelle (32) est codé et/ou détectable électriquement.

7. Procédé selon l'une des revendications précédentes, dans lequel la face d'individualisation (31) munie de l'individualisation pluridimensionnelle (32) est pourvue dans une autre étape de fabrication d'un autre ajout de matériau (35) qui est de préférence transparent, semi-transparent ou opaque.

8. Procédé selon la revendication 7, dans lequel l'ajout de matériau (35) est réalisé par injection du produit (30) préfabriqué et pourvu de l'individualisation pluridimensionnelle (32) dans l'évidement pour moulage d'un outil de moulage par injection sur une machine de moulage par injection.

9. Procédé selon l'une des revendications précédentes, dans lequel la face d'individualisation (31) est prétraitée pour améliorer les propriétés d'adhérence avant l'ajout de l'individualisation et/ou prétraitée ou munie d'une inscription au moyen d'un laser.

10. Procédé selon une ou plusieurs des revendications précédentes, dans lequel un support (40) pour le produit préfabriqué (30) est fabriqué en outre pour l'application de l'individualisation pluridimensionnelle (32) également sur le dispositif (I) pour l'ajout en une étape avant l'individualisation, le support (40) étant adapté à la cinématique donnée du dispositif (I) pour l'ajout.

11. Procédé selon l'une des revendications précédentes, dans lequel au moins un autre matériau (37) est appliqué en outre sur le produit préfabriqué (30) pour l'adaptation individuelle à l'utilisateur et/ou pour une autre individualisation pluridimensionnelle du produit.

12. Procédé selon la revendication 11, dans lequel des surfaces élastiques, en particulier avec une rétroaction tactile, sont formées à partir des autres matériaux (37).

13. Procédé selon l'une des revendications précédentes, dans lequel le produit préfabriqué (30) porte sur lui les informations pour l'individualisation sous la forme de données d'ajout et de procédé et dans lequel le dispositif (I) pour l'ajout de l'individualisation pluridimensionnelle (32) identifie et traite le produit préfabriqué (30) à l'aide de ces informations portées.

14. Produit préfabriqué (30) avec une face (31) pour un ajout d'un matériau pluridimensionnel et un support d'informations (45) associé au produit préfabriqué (30) et qui reçoit des informations pour l'ajout du matériau pluridimensionnel, dans lequel le support d'informations peut être fourni avec le produit préfabriqué, dans lequel la face est une face d'individualisation (31) du produit préfabriqué qui est prévue et appropriée pour l'individualisation du produit préfabriqué, dans lequel l'ajout est une individualisation pluridimensionnelle (32) se basant sur les informations et qui formée de gouttes (70) fondues entre elles et ainsi fermement reliées entre elles pour la formation d'un objet tridimensionnel à forme unique.

15. Produit préfabriqué selon la revendication 14, dans lequel l'individualisation pluridimensionnelle (32) est un motif de préférence à usage unique.

16. Produit préfabriqué selon la revendication 14 ou 15, dans lequel l'individualisation pluridimensionnelle (32) comprend au moins l'un des éléments comprenant une géométrie prédéterminée, un numéro de série, une signature, une image ou une protection contre la copie et/ou le matériau (34) utilisé pour l'individualisation pluridimensionnelle (32) est codé et/ou détectable électriquement.

17. Produit préfabriqué selon l'une des revendications 14 à 16, dans lequel l'individualisation pluridimensionnelle (32) est recouverte d'un autre matériau (35), lequel est de préférence transparent, semi-transparent ou opaque.
